# EUROPÄISCHE PATENTANMELDUNG

(11) **EP 3 657 638 A1**
(43) Veröffentlichungstag der Anmeldung: **27.05.2020**
(21) Anmeldenummer: 19203516.0
(22) Anmeldetag: 16.10.2019
(51) Int. Cl.: H02K 1/27, H02K 29/03

(54) **ROTOR EINES ELEKTROMOTORS SOWIE ELEKTROMOTOR**

(30) Priorität: 22.11.2018 DE 102018220057
(71) Anmelder: Robert Bosch GmbH, 70442 Stuttgart (DE)
(72) Erfinder: Schuerg, Stefan, 71636 Ludwigsburg (DE); Grahlmann, Ivo, 31141 Hildesheim (DE); Kol, Murat, 70437 Stuttgart (DE)

(57) **Zusammenfassung**

Die vorliegende Erfindung betrifft einen Rotor (1) eines Elektromotors (2) umfassend einen Rotorkörper (12) mit mehreren Rotorblechpaketen (3), die jeweils eine Vielzahl von gestapelten Einzelblechen (4) aufweisen, wobei der Rotorkörper (12) eine Vielzahl von Rotorpolen (13) aufweist, wobei jeder Rotorpol (13) zumindest eine Magnettasche (5) zum Aufnehmen zumindest eines Permanentmagneten (8) aufweist, wobei die Magnettasche (5) den jeweiligen Rotorpol (13) in Radialbereiche (X, Y) unterteilt, wobei die Radialbereiche (X, Y) über Verbindungsstege miteinander verbunden sind, wobei jeder Verbindungssteg zwischen der Magnettasche (5) und dem Außenumfang des Rotors (1) ein Randsteg (11) ist, wobei die Magnettaschen (5) jeweils einen Zentralbereich (6) zur Aufnahme des Permanentmagneten (8) und beidseitig des Zentralbereichs (6) jeweils einen magnetisch nichtleitenden Randbereich (7) zur Verminderung von Streuflüssen aufweist, dadurch gekennzeichnet, dass bezüglich eines der Rotorpole (13) die Kontur des an dem Randsteg (11) anliegenden Randbereichs (7) der Magnettasche (5) von einem der Rotorblechpakete (3) zu einem jeweils benachbarten Rotorblechpaket (3) derart in Umfangsrichtung (100) verändert ist, dass der durch den Permanentmagnet (8) fließende Magnetfluss (300) von dem Rotorblechpaket (3) zu dem benachbarten Rotorblechpaket (3) in Umfangsrichtung (100) verschoben ist.

## Beschreibung

### Stand der Technik

Die vorliegende Erfindung betrifft einen Rotor eines Elektromotors. Außerdem betrifft die Erfindung einen Elektromotor, umfassend einen derartigen Rotor.

Aus dem Stand der Technik sind Elektromotoren bekannt. Auch ist das Problem von Rastmomenten bei Elektromotoren bekannt. Um einen rastfreien Lauf zu gewährleisten, wird bei permanent erregten Elektromotoren entweder der Stator oder der Rotor geschrägt aufgebaut. Dabei wird der magnetische Fluss über die axiale Länge des Rotors oder Stators um mehrere Winkelgrade verschoben. Somit kommen die einzelnen Pole nicht gleichzeitig in den Einfluss des Statorfelds. Ein solcher geschrägter Aufbau ist beispielsweise aus der DE 10 2014 019 218 A1 bekannt.

### Offenbarung der Erfindung

Erfindungsgemäß wird der Fluss innerhalb des Elektromotors nicht durch den Versatz der Magnete wie im Stand der Technik gesteuert, sondern über eine Form des Blechschnitts des Rotorblechpakets des Rotors des Elektromotors. Somit ist insbesondere vermeidbar, dass Magnete verschoben aufeinanderstoßen, wie dies im Stand der Technik der Fall ist. In diesen Bereichen gibt es die Leistung senkende 3D-Magnetkreise, die mit der Erfindung wegfallen. Außerdem ist eine Magnetisierung der Magnete im übersättigten Bereich vereinfacht und insbesondere auch vervollständigt, da die Magnetisierung an derselben Position erfolgt. Durch den Wegfall der abschnittsweisen Schrägung der Anordnung der Permanentmagnete lassen sich größere Bereiche des Rotors als Paket herstellen, insbesondere auch der ganze Rotor. Damit sinken Handlings-Kosten und die Gesamthöhentoleranz verbessert sich erheblich.

Insbesondere aufgrund durchgängiger Magnettaschen und dadurch mehr Magnetmasse im Rotor lässt sich die Leistung derselben E-Maschine und/oder desselben Elektromotors erhöhen. Schrägungstoleranzen zwischen den Einzelblechen des Rotorblechpakets fallen weg. Auch steigt der Freiheitsgrad bei der Realisierung der Schrägungseffekte, da unterschiedliche Einzelbleche beliebig miteinander zusammengestellt werden können. Insgesamt ist eine Reduzierung der Gesamtlänge des Rotors möglich. Außerdem ist keine Ausrichtungskerbe am Rotor für die Schrägung notwendig, insbesondere ist kein komplizierter Prozess zum Schrägen wie im Stand der Technik notwendig. Die Magnete sind also erfindungsgemäß alle gleichzeitig axial verfügbar.

Der erfindungsgemäße Rotor eines Elektromotors umfasst einen Rotorkörper mit mehreren Rotorblechpaketen, die jeweils eine Vielzahl von gestapelten Einzelblechen aufweisen. Der Rotorkörper weist außerdem eine Vielzahl von Rotorpolen auf. Jeder Rotorpol wiederum weist zumindest eine Magnettasche auf. Die Magnettaschen sind insbesondere als schlitzförmige Ausnehmungen in den Einzelblechen gefertigt und dienen zum Aufnehmen eines Permanentmagneten.

Jede Magnettasche unterteilt den jeweiligen Rotorpol in Radialbereiche. Dadurch sind zumindest ein radial äußerer Polbereich und ein radial innerer Polbereich vorhanden. Die Radialbereiche sind über Verbindungsstege miteinander verbunden. Die Verbindungsstege sind insbesondere durch Bereiche zwischen zwei Magnettaschen und/oder durch Bereiche zwischen Magnettasche und Luftspalt realisiert.

Dabei ist vorgesehen, dass die Magnettaschen einen Zentralbereich und beidseitig an den Zentralbereich anschließende Randbereiche aufweisen. Es ist vorgesehen, dass die Permanentmagnete nur an den Zentralbereichen der Magnettaschen vorhanden sind. Dabei sind die Permanentmagnete bevorzugt optimal zueinander angeordnet, so dass parasitäre 3D-Magnetkreise wie im Stand der Technik vermieden sind. Die Randbereiche der Magnettaschen sind vorteilhafterweise frei von Permanentmagneten. Somit dienen die zweiten Magnettaschen ausschließlich zum Steuern des Flusses innerhalb des Elektromotors, nicht jedoch zur Aufnahme von Permanentmagneten.

Der Randbereich umfasst somit einen radial äußersten Bereich der Magnettaschen. Dadurch ist ein Verbindungssteg definiert, der ein Randsteg zwischen Magnettasche und Luftspalt ist. Der Luftspalt ist insbesondere zwischen der Außenumfangsfläche des Rotors und einem Stator des Elektromotors definiert. Durch die entsprechende Ausgestaltung des radial äußersten Bereichs der Magnettasche lässt sich der magnetische Fluss innerhalb des Elektromotors einstellen.

Bezüglich eines der Rotorpole ist die Kontur des an dem Randsteg anliegenden Randbereichs der Magnettasche von einem der Rotorblechpakete zu einem jeweils benachbarten Rotorblechpaket derart in Umfangsrichtung verändert, dass der durch den Permanentmagnet fließende Magnetfluss von dem Rotorblechpaket zu dem benachbarten Rotorblechpaket in Umfangsrichtung verschoben ist. Somit erfolgt eine Steuerung des Flusses innerhalb des Elektromotors durch die unterschiedliche Ausbildung der radial äußeren Randbereiche der einzelnen Rotorblechpakete. Bezüglich der d-Achse des Rotors ist somit bevorzugt ein symmetrischer Magnetfluss in einem Teil der Rotorblechpakete erreicht, während bei anderen Rotorblechpaketen der Magnetfluss bezüglich der d-Achse entweder nach links oder nach rechts verschoben ist. Dadurch wird der Magnetfluss variiert. Dies führt zu einer Rastmomentunterdrückung und einem gleichmäßigen Drehmomentverlauf. Insbesondere werden dieselben Effekte erreicht, wie bei der aus dem Stand der Technik bekannten Rotorschrägstellung, wobei die Herstellung und Montage des Rotors erheblich vereinfacht ist.

Bei allen Rotorblechpaketen sind die Zentralbereiche der Magnettaschen bevorzugt fluchtend ausgebildet. Dadurch ist eine Montage der Permanentmagnete einfach und aufwandsarm ermöglicht. Zumindest die radial äußeren Randbereiche, die an den Randstegen anliegen, sind besonders vorteilhaft zumindest teilweise gegeneinander versetzt. Somit ist insbesondere erreicht, dass die einzelnen Einzelbleche des Rotorblechpakets die Randbereiche von anderen Einzelblechen des Rotorblechpakets zumindest teilweise verdecken. Die Magnettaschen der Einzelbleche an den Randbereichen sind somit nicht fluchtend angeordnet und unterscheiden sich damit von den ersten Teilbereichen. Die ersten Teilbereiche hingegen ermöglichen ein durchgängiges Anordnen der Permanentmagnete.

Die Unteransprüche haben bevorzugte Weiterbildungen der Erfindung zum Inhalt.

Bevorzugt ist vorgesehen, dass jeder Randsteg eines Rotorpols bezüglich der Lage seiner Enden von einem der Rotorblechpakete zu einem jeweils benachbarten Rotorblechpaket in Umfangsrichtung versetzt ist. Somit erfolgt insbesondere ein unterschiedliches Anordnen der radial äußeren Randbereiche der Magnettaschen. Dadurch lässt sich vorteilhaft das zuvor beschriebene verschieben der Magnetflüsse erreichen.

Vorteilhafterweise weist jeder Randsteg jeweils einen engsten Querschnitt auf. Die engsten Querschnitte aller Randstege eines Rotorpols sind insbesondere von einem der Rotorblechpakete zu einem jeweils benachbarten Rotorblechpaket in Umfangsrichtung versetzt. Somit ist der durch den Permanentmagnet fließende Magnetfluss verschoben, wobei die Einzelbleche des Rotorblechpakets einfach und aufwandsarm herstellbar sind.

Bezüglich eines der Rotorpole ist die Kontur des an dem Randsteg anliegenden Randbereichs der Magnettasche über alle Rotorblechpakete bevorzugt derart in Umfangsrichtung verändert, dass der durch die Permanentmagnete fließende Magnetfluss über alle Rotorblechpakete gesehen zunehmend in Umfangsrichtung verschoben ist. Dadurch ist das Auftreten von Rastmomenten verringert, wodurch ein gleichmäßiger Drehmomentverlauf erreichbar ist.

Bevorzugt ist ein Abschnitt der Kontur der an den Randstegen anliegenden Randbereichen der Magnettaschen in Umfangsrichtung entlang einer durch den Randbereich verlaufenden Linie verschoben ist. Somit ist ein gleichmäßiger Aufbau der Einzelbleche der Rotorblechpakete erreicht. Insbesondere ist lediglich ein Teil des äußeren Randbereichs jeder Magnettasche verschoben ausgebildet. Somit ist insbesondere erreicht, dass jedes Einzelblech gleich große Magnettaschen aufweist, die sich lediglich in ihrer Form unterscheiden.

Die Permanentmagnete sind vorteilhafterweise V-förmig und/oder C-förmig angeordnet. Somit sind die Magnettaschen insbesondere in Lagen angeordnet, wobei jede Lage eine V-förmige oder C-förmige Anordnung bildet. Beispielsweise weist der Rotor einlagige C-Magnetanordnungen oder V-Magnetanordnungen an Permanentmagneten auf. Ebenso kann der Rotor mehrlagige VC-W-Anordnungen oder CC-Anordnungen umfassen. In jedem Fall wird durch die Randbereiche ein Fluss des Elektromotors optimal eingestellt.

Besonders vorteilhaft weist der Rotorkörper mehrere verschiedene Rotorblechpakete auf. Die Rotorblechpakete umfassen jeweils identische Einzelbleche. Die Einzelbleche verschiedener Rotorblechpakete weisen unterschiedliche an den jeweiligen Randstegen anliegende Randbereiche auf. Dabei erfolgt eine Stapelung der Einzelbleche zu dem Rotorblechpaket derart, dass eine Stapelfolge der Einzelbleche ein sich wiederholendes Muster an verschiedenen Randbereichen aufweist. Somit ist insbesondere erreichbar, dass sich unmittelbar benachbarte Einzelbleche in ihren Randbereichen unterscheiden, die an den jeweiligen Randstegen anliegen. Durch das sich wiederholende Muster hingegen ist erreichbar, dass die Anzahl der unterschiedlichen Einzelbleche begrenzt ist. Somit ist einerseits eine sichere und zuverlässige Steuerung des Magnetflusses ermöglicht, andererseits ist ein Aufbau des Rotorblechpakets des Elektromotors nicht aufwendig zu fertigen.

Besonders vorteilhaft weist jedes Muster einen zunehmenden Versatz der an dem Randsteg anliegenden Randbereiche in eine Umfangsrichtung des Rotors auf. Somit ist ein äquivalent zu der Schrägung im Stand der Technik erreicht. Durch den zunehmenden Versatz ist jedes Muster einfach und aufwandsarm herstellbar, da lediglich ein minimaler Versatz, ein maximaler Versatz und die Anzahl von Einzelblechen mit einem Versatz zwischen dem minimalen Versatz und dem maximalen Versatz festgelegt werden müssen. Somit ist einerseits ein detailliertes Einstellen des Flusses des Elektromotors ermöglicht, andererseits ist der Rotor einfach und aufwandsarm herstellbar.

Vorteilhafterweise erstrecken sich die Magnettaschen der durch das alle Rotorblechpakete. Dies gilt vorteilhafterweise für die Zentralbereiche der Magnettaschen. Somit ist eine durchgängige Öffnung in dem Rotorkörper vorhanden, die sich durch den gesamten Rotor zieht. Somit lassen sich Permanentmagnete entlang der gesamten axialen Länge des Rotors platzieren. Damit wird eine optimale Magnetmasse des Rotors sichergestellt.

Besonders vorteilhaft ist vorgesehen, dass eine minimale Steghöhe bei allen Randstegen identisch ist. Insbesondere weist jeder Randsteg eine unterschiedliche Höhe über die Magnettaschen auf. Dabei ist der Verlauf dieser unterschiedlichen Höhe bei allen Randstegen vorteilhafterweise identisch. Auf diese Weise lässt sich der magnetische Fluss innerhalb des Elektromotors optimal einstellen, ohne andere Parameter des Rotors oder des Elektromotors negativ zu beeinflussen.

Die Erfindung betrifft schließlich einen Elektromotor. Der Elektromotor umfasst einen Rotor wie zuvor beschrieben. Dabei ist vorgesehen, dass der Rotor von einem Stator des Elektromotors angetrieben wird. Durch die zuvor beschriebene Anordnung der Randbereiche der Magnettaschen des Rotors ist ein Fluss innerhalb des Elektromotors optimiert. Gleichzeitig lassen sich Permanentmagnete des Rotors einfach und aufwandsarm anbringen.

Die Magnettaschen und/oder die Einzelbleche sind insbesondere durch Stanzen hergestellt. Somit lassen sich die Kontur der Einzelbleche sowie die Kontur der Magnettaschen einfach und kostengünstig herstellen. Dies gilt insbesondere für die unterschiedlichen Randbereiche, da hier lediglich verschiedene Stanzwerkzeuge bereitgestellt werden müssen. Somit lassen sich die Einzelbleche in hoher Stückzahl einfach und aufwandsarm herstellen.

Vorteilhafterweise sind die Randbereiche von Magnettaschen von in dem Rotorkörper benachbart angeordneten Rotorblechpaketen mit jeweils identischen Einzelblechen in Umfangsrichtung des Rotors verschoben. Somit ist insbesondere vorgesehen, dass die Randbereiche von zwei benachbarten Rotorblechpaketen nicht fluchtend angeordnet sind, sondern vielmehr einen Versatz aufweisen. Dabei kann vorgesehen sein, dass zwei nicht unmittelbar benachbarte Rotorblechpakete identische Magnettaschen aufweisen. Somit ist einerseits eine Steuerung des Flusses des Elektromotors ermöglicht, andererseits ist ein Herstellungsaufwand reduziert, da nicht für den gesamten Rotorkörper individuelle Einzelbleche oder Rotorblechpakete hergestellt werden müssen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Abbildung eines Elektromotors gemäß einem Ausführungsbeispiel der Erfindung,
- Figur 2: eine schematische Ansicht mehrerer Einzelbleche eines Rotors gemäß einem Ausführungsbeispiel der Erfindung,
- Figur 3: eine schematische Explosionsdarstellung gestapelter Rotorblechpakete des Rotors gemäß dem Ausführungsbeispiel der Erfindung, und
- Figur 4: eine schematische Ansicht des Rotors gemäß dem Ausführungsbeispiel der Erfindung.

### Ausführungsform der Erfindung

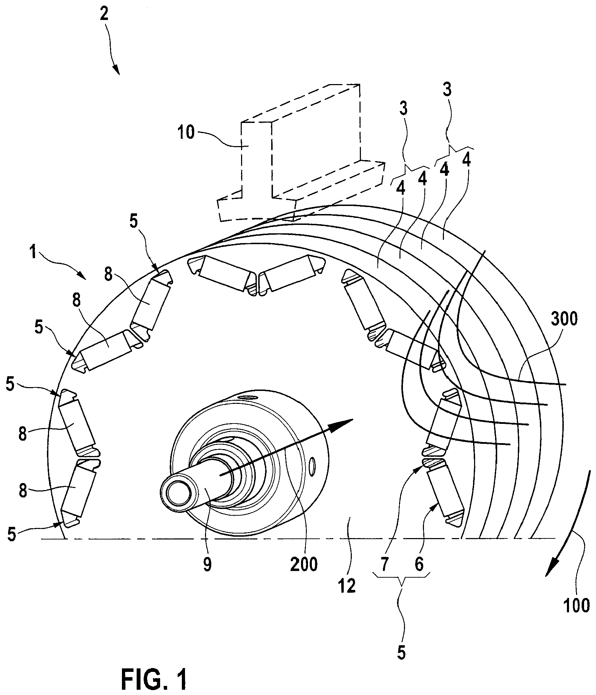

Figur 1 zeigt schematisch einen Elektromotor 2 gemäß einem Ausführungsbeispiel der Erfindung. Der Elektromotor 2 umfasst einen Rotor 1 sowie einen Stator 10. Der Stator 10 ist lediglich schematisch durch einen Statorzahn angedeutet.

Der Rotor 1 umfasst mehrere Rotorblechpakete 3, die gemeinsam einen Rotorkörper 12 formen, der auf einer Welle 9 angebracht ist. Somit können die Rotorblechpakete 3 rotiert werden. Jedes Rotorblechpaket 3 wiederum umfasst eine Vielzahl von identischen Einzelblechen 4, die zum jeweiligen Rotorblechpaket 3 gestapelt sind. Die Einzelbleche 4 sind vorteilhafterweise aus einem Elektroblech hergestellt, insbesondere durch Stanzen. In Figur 1 ist beispielhaft gezeigt, dass zwei Rotorblechpakete 3 vorhanden sind, die aus jeweils zwei Einzelblechen 4 gestapelt sind.

Jedes Einzelblech 4 umfasst mehrere Ausnehmungen, sodass die Rotorblechpakete 3 Magnettaschen 5 bilden. Die Magnettaschen 5 weisen einen Zentralbereich 6 und beidseitig daran anschließende Randbereiche 7 auf, wobei Zentralbereich 6 und Randbereiche 7 unmittelbar aneinander anstoßen und nicht voneinander abgegrenzt sind. Im Folgenden werden stets die radial äußeren Randbereiche beschrieben.

Werden die Rotorblechpakete 3 zu dem Rotorkörper gestapelt, so ist vorgesehen, dass sämtliche Zentralbereiche 6 der Magnettaschen 5 fluchtend angeordnet werden. Dies bedeutet, dass die Zentralbereiche 6 bezüglich einer Radialrichtung 200 und bezüglich einer Umfangsrichtung 100 stets an demselben Bereich des Rotors 2 angeordnet sind. Somit entsteht eine durchgängige Öffnung, die sich insbesondere über eine gesamte Länge des Rotors 1 erstreckt. In diese Öffnung lassen sich Permanentmagnete 8 einbringen.

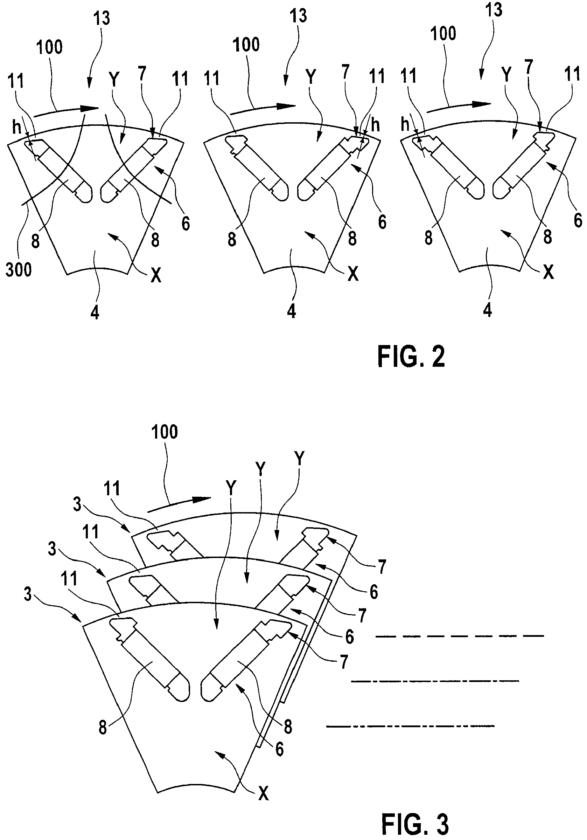

Die Randbereiche 7 der Magnettaschen 5 sind insbesondere derart geformt, dass der durch den Permanentmagneten 8 verlaufende Magnetfluss bei benachbarten Rotorblechpaketen 3 in Umfangsrichtung 100 verschoben ist. In diesen Randbereichen 7 sind keinerlei Permanentmagnete 8 vorhanden, so dass sämtliche Randbereiche 7 frei von Permanentmagneten 8 sind. Die Form der Randbereiche 7 dient lediglich zum Steuern des Magnetflusses 300. Dies wird nachfolgend mit Bezug auf Figur 2, Figur 3 und Figur 4 erläutert.

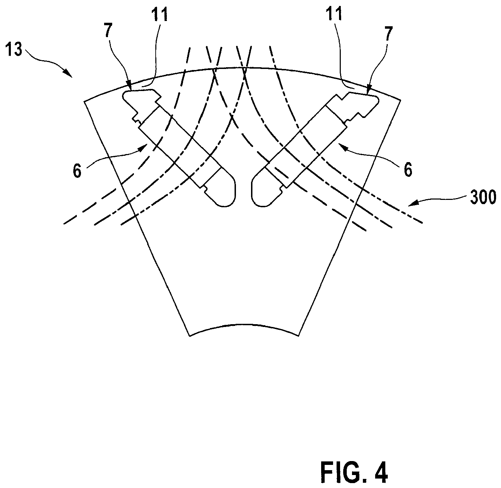

Figur 2 zeigt schematisch drei verschiedene Einzelbleche 4, die sich jeweils zu einem Rotorblechpaket 3 stapeln lassen. Somit lassen sich drei unterschiedliche Rotorblechpakete 3 realisieren, die jeweils identische Einzelbleche 4 umfassen. Figur 3 zeigt schematisch eine Explosionsdarstellung gestapelter Rotorblechpakete 3, wobei jedes Rotorblechpaket 3 mehrere Einzelbleche 4 eines des in Figur 2 gezeigten Typs umfasst. Figur 4 zeigt schließlich eine Ansicht des gestapelten Rotorkörpers. Die gesamten Figuren 2, 3 und 4 zeigen jeweils nur einen Ausschnitt von einem Rotorpol 13 des gesamten Rotors 1.

Die Magnettaschen 5 teilen den Rotorpol 13 in einen radial inneren Polbereich X und einen radial äußeren Polbereich Y. Der radial innere Polbereich X und der radial äußere Polbereich Y sind durch Verbindungsstege zwischen den Magnettaschen 5 und/oder zwischen Magnettasche 5 und Außenumfang des Rotors 1 verbunden. Diejenigen Verbindungsstege, die zwischen Magnettasche 5 und Außenumfang des Rotors 1 liegen, sind Randstege 11. Die Randstege 11 werden insbesondere durch die Kontur der an den Randstegen 11 anliegenden Randbereiche 7 der Magnettaschen geformt.

Wie aus Figur 2 ersichtlich ist, umfassen die Einzelbleche 4 jeweils identisch ausgebildete Zentralbereiche 6, in denen sich die Permanentmagnete 8 anbringen lassen. Dahingegen sind Abschnitt der Kontur der an den Randstegen 11 anliegenden Randbereichen 7 der Magnettaschen 5 in Umfangsrichtung 100 entlang einer durch den Randbereich 7 verlaufenden Linie verschoben. Somit lassen sich insbesondere unterschiedliche Magnetflüsse 300 realisieren.

Figur 3 zeigt, dass die Rotorblechpakete 3 derart zu dem Rotorkörper gestapelt werden, dass sich ein wiederholendes Muster aus unterschiedlichen an den Randstegen 11 anliegenden Randbereichen 7 ergibt. Insbesondere sind Konturabschnitte dieser Randbereiche 7 entlang der Umfangsrichtung 100 verschoben. Dies bedeutet, dass benachbarte Rotorblechpakete 3 an den den Randstegen 11 anliegende Randbereiche 7 aufweisen, die nicht fluchtend ausgebildet sind. Dabei bleibt eine minimale Steghöhe h (vgl. Figur 2) bei allen Randstegen 11 identisch. Insbesondere ist aber ein kleinster Querschnitt, an dem die Randstege 11 die minimale Steghöhe h aufweisen, bei benachbarten Rotorblechpaketen 3 nicht an identischen Positionen in Umfangsrichtung angeordnet.

In Figur 3 ist zusätzlich schematisch dargestellt, welche Linienkontur der Feldlinien des Magnetflusses 300 aus Figur 4, welchem Rotorblechpaket 3 aus Figur 3 zuzuordnen ist. Somit ist insbesondere aus Figur 4 ersichtlich, wie die an den Randstegen 11 anliegenden Randbereiche 7 zur Steuerung des Magnetflusses 300 des Elektromotors 2 verwendet werden können. Insbesondere lässt sich somit ein Resultat erzielen, das denselben Effekt wie die aus dem Stand der Technik bekannte Schrägstellung der Permanentmagnete 8. Insbesondere wird dadurch ein rastfreier Lauf gewährleistet, in dem erreicht wird, dass die einzelnen Rotorpole 13 nicht allesamt gleichzeitig in den Einfluss des Statorfelds gelangen.

Durch das Verschieben des Magnetflusses 300 bei benachbarten Rotorblechpaketen 3 wird somit erreicht, dass die Rastmomente des Elektromotors 2 minimiert sind. Gleichzeitig verbleibt eine durchgängige Öffnung durch alle Rotorblechpakete 3, in die die Permanentmagneten 8 einfach und aufwandsarm eingesetzt werden können. Somit ist ein Aufbau des Elektromotors 2, insbesondere des Rotors 1, vereinfacht. Auch lässt sich die Magnetmasse innerhalb des Rotors 1 im Vergleich zum Stand der Technik erhöhen. Schließlich wird vermieden, dass innerhalb des Rotors 1 Magnete gegeneinander verschoben sind, so dass insbesondere das Auftreten von parasitären 3D-Magnetkreisen verhindert wird.

## Patentansprüche

1. Rotor (1) eines Elektromotors (2) umfassend einen Rotorkörper (12) mit mehreren Rotorblechpaketen (3), die jeweils eine Vielzahl von gestapelten Einzelblechen (4) aufweisen, wobei der Rotorkörper (12) eine Vielzahl von Rotorpolen (13) aufweist, wobei jeder Rotorpol (13) zumindest eine Magnettasche (5) zum Aufnehmen zumindest eines Permanentmagneten (8) aufweist, wobei die Magnettasche (5) den jeweiligen Rotorpol (13) in Radialbereiche (X, Y) unterteilt, wobei die Radialbereiche (X, Y) über Verbindungsstege miteinander verbunden sind, wobei jeder Verbindungssteg zwischen der Magnettasche (5) und dem Außenumfang des Rotors (1) ein Randsteg (11) ist, wobei die Magnettaschen (5) jeweils einen Zentralbereich (6) zur Aufnahme des Permanentmagneten (8) und beidseitig des Zentralbereichs (6) jeweils einen magnetisch nichtleitenden Randbereich (7) zur Verminderung von Streuflüssen aufweist, **dadurch gekennzeichnet, dass** bezüglich eines der Rotorpole (13) die Kontur des an dem Randsteg (11) anliegenden Randbereichs (7) der Magnettasche (5) von einem der Rotorblechpakete (3) zu einem jeweils benachbarten Rotorblechpaket (3) derart in Umfangsrichtung (100) verändert ist, dass der durch den Permanentmagnet (8) fließende Magnetfluss (300) von dem Rotorblechpaket (3) zu dem benachbarten Rotorblechpaket (3) in Umfangsrichtung (100) verschoben ist.

2. Rotor (1) nach Anspruch 1, **dadurch gekennzeichnet, dass** jeder Randsteg (11) eines Rotorpols (13) bezüglich der Lage seiner Enden von einem der Rotorblechpakete (3) zu einem jeweils benachbarten Rotorblechpaket (3) in Umfangsrichtung versetzt ist.

3. Rotor (1) nach einem der vorhergehenden Ansprüche, **dadurch gekennzeichnet, dass** jeder Randsteg (11) jeweils einen engsten Querschnitt aufweist, wobei die engsten Querschnitte aller Randstege (11) eines Rotorpols (13) von einem der Rotorblechpakete (3) zu einem jeweils benachbarten Rotorblechpaket (3) in Umfangsrichtung versetzt sind.

4. Rotor (1) nach einem der vorhergehenden Ansprüche, **dadurch gekennzeichnet, dass** bezüglich eines der Rotorpole (13) die Kontur des an dem Randsteg (11) anliegenden Randbereichs (7) der Magnettasche (5) über alle Rotorblechpakete (3) derart in Umfangsrichtung (100) verändert ist, dass der durch die Permanentmagnete (8) fließende Magnetfluss (300) über alle Rotorblechpakete (3) gesehen zunehmend in Umfangsrichtung (100) verschoben ist.

5. Rotor (1) nach einem der vorhergehenden Ansprüche, **dadurch gekennzeichnet, dass** ein Abschnitt der Kontur der an den Randstegen (11) anliegenden Randbereichen (7) der Magnettaschen (5) in Umfangsrichtung (100) entlang einer durch den Randbereich (7) verlaufenden Linie verschoben ist.

6. Rotor (1) nach einem der vorhergehenden Ansprüche, **dadurch gekennzeichnet, dass** mehrere Magnettaschen (5) pro Rotorpol (13) in einer oder mehreren Lagen angeordnet sind, wobei eine Lage eine V-förmige oder C-förmige Anordnung bildet.

7. Rotor (1) nach einem der vorhergehenden Ansprüche, **dadurch gekennzeichnet, dass** verschiedene Rotorblechpakete (3) aus jeweils gleichen Einzelblechen (4) gestapelt sind, wobei sich die Rotorblechpakete (3) in der Ausbildung zumindest des an dem jeweiligen Randsteg (11) anliegenden Randbereichs (7) unterscheiden, wobei eine Stapelfolge der Rotorblechpakete (3) ein sich wiederholendes Muster von verschiedenen an dem Randsteg (11) anliegenden Randbereichen (7) aufweist.

8. Rotor (1) nach Anspruch 7, **dadurch gekennzeichnet, dass** jedes sich wiederholende Muster einen zunehmenden Versatz der an den jeweiligen Randstegen (11) anliegenden Randbereiche (7) in Umfangsrichtung (100) des Rotors (1) aufweist.

9. Rotor (1) nach einem der vorhergehenden Ansprüche, **dadurch gekennzeichnet, dass** durch die Magnettasche (5) eine Öffnung durch alle Rotorblechpakete (3) hergestellt ist, die insbesondere an den Zentralbereichen (6) fluchtend ausgebildet ist.

10. Rotor (1) nach einem der vorhergehenden Ansprüche, **dadurch gekennzeichnet, dass** eine minimale Steghöhe (h) bei allen Randstegen (11) identisch ist.

11. Elektromotor (2) umfassend einen Rotor (1) nach einem der vorhergehenden Ansprüche sowie einen Stator (10), wobei der Rotor (1) durch den Stator (10) antreibbar ist.
